# FASCICULE DE BREVET EUROPEEN

(11) **EP 1 203 501 B1**
(45) Date de publication et mention de la délivrance du brevet: **10.08.2011**
(21) Numéro de dépôt: 01947520.1
(22) Date de dépôt: 19.06.2001
(51) Int. Cl.: H04L 29/08, H04W 4/14

(54) **PROCEDE POUR LE TRAITEMENT ET LA TRANSMISSION DE DONNEES SUR UN RESEAU DE TELEPHONIE MOBILE ET CARTE A PUCE ELECTRONIQUE**
VERFAHREN ZUR DATENVERARBEITUNG UND -ÜBERTRAGUNG ÜBER EIN MOBILFUNKNETZ UND CHIPKARTE
METHOD FOR PROCESSING AND TRANSMITTING DATA ON A MOBILE TELEPHONE NETWORK AND CHIPCARD

(30) Priorité: 22.06.2000 FR 0007978
(43) Date de publication de la demande: 08.05.2002
(73) Titulaire: CP8 TECHNOLOGIES, 78431 Louveciennes (FR)
(72) Inventeur: NACHEF, Armand, F-78180 Montigny le Bretonneux (FR)
(74) Mandataire: Cassagne, Philippe M.J.
(86) Numéro de dépôt international: PCT/FR2001/001903
(87) Numéro de publication internationale: WO 2001/099448

(56) Documents cités:
- WO-A-99/63767
- US-A- 6 055 424

## Description

L'invention concerne un procédé de traitement et de transmission de données numériques sur un réseau de téléphonie mobile.

Elle s'applique plus particulièrement à un réseau de téléphonie mobile conforme à la norme "GSM" (acronyme pour "Groupe spécial Systèmes Mobiles publics de radiocommunications fonctionnant dans la bande des 900 MHz).

L'invention concerne encore un système embarqué muni d'une puce électronique pour la mise en oeuvre du procédé.

Dans le cadre de l'invention, le terme "réseau" doit être compris dans son sens le plus général. Il inclut les composants de transmission proprement dits du réseau (sous-systèmes de radiotransmission, câbles de transmissions, faisceaux hertziens, sous-systèmes "filaires" terrestres, etc.), mais aussi tous les systèmes raccordés au réseau de téléphonie mobile (stations de base, contrôleurs de station, commutateurs, annuaires, etc., et, de façon plus générale, tous systèmes de traitement informatique de données et serveurs raccordés au réseau), y compris les postes, équipements ou stations mobiles détenus par les utilisateurs (abonnés) du réseau de téléphonie mobile.

Ces derniers dispositifs peuvent être des téléphones portatifs ou des terminaux plus complexes, par exemple un terminal cumulant les fonctionnalités de téléphone et d'organiseur. Pour simplifier, sans restreindre en quoi que ce soit la portée de l'invention, ces dispositifs seront appelés ci-après "téléphones mobiles". Les téléphones mobiles sont munis, notamment, d'un système embarqué muni de moyens de traitement de l'information et de mémorisation, incluant un module fonctionnel connu sous l'abréviation "SIM" (pour "Subscriber Identity Module" ou "Module d'identification d'abonné"). Egalement pour simplifier, on supposera ci-après que le module "SIM" est porté par une carte à puce. Un logiciel d'exploitation de la carte à puce est également prévu (dit "OS", pour "Operating System").

Dans l'état actuel des techniques, les téléphones mobiles des réseaux "GSM" ne sont plus seulement utilisés pour téléphoner. On peut les utiliser aussi pour traiter et envoyer des données numériques, notamment sous la forme de courts messages (service dit "GSM-Data"). Ces messages ont typiquement une longueur de 160 septets ou de 140 octets, selon les applications.

Récemment, on a assisté à l'apparition d'une technologie normalisée dite "Sim Toolkit". Cette technologie fait d'ores et déjà partie des services complémentaires offerts par certains opérateurs de téléphonie mobile des réseaux "GSM". De façon pratique, une pièce de logiciel spécifique est implémentée dans la carte à puce "SIM" du téléphone.

Cette norme permet aux applications, qui tournent sur la carte à puce ("SIM") des téléphones mobiles, d'envoyer des commandes à l'équipement mobile associé de type :
- afficher un texte sur l'écran du téléphone mobile ;
- demander à l'utilisateur de taper du texte comme entrée de l'application
- demander l'appel téléphonique d'un numéro ;
- demander l'envoi d'un message court qui contient du texte ou des données, à un serveur ou à un autre téléphone ;
- demander l'exécution d'une commande sur une carte à puces auxiliaire dans l'équipement mobile ;
- etc.

Ces commandes sont appelées commandes "pro-actives".

La norme "Sim Toolkit" permet aussi aux applications de la carte à puce "SIM" de réagir suite à la réception d'un certain nombre d'événements provenant de l'équipement mobile. Ces événements sont de type :
- sélection de l'application à partir d'une commande dite de "MENU" qui se trouve sur un clavier dont sont munis les équipements mobiles ;
- réception d'un-message court à destination-d'une application ou du système d'exploitation de la carte à puce "SIM" ;
- expiration du temps programmé dans une minuterie de l'équipement mobile ;
- demande d'appel d'un numéro téléphonique
- etc.

Les fonctionnalités apportées par cette norme permettent de développer un très grand nombre d'applications distinctes sur la carte à puce, ce dans le but de fournir aux utilisateurs des services dits "à valeur ajoutée".

Pour une description plus détaillée de la technologie "Sim Toolkit", on se reportera avec profit à la norme "GSM 11.14".

En résumé, dans l'état de la technique actuelle, le standard "Sim Toolkit" consiste à développer des applications sur la carte à puce qui sont capables, à la fois, de commander l'équipement mobile supportant la carte à puce et aussi de réagir à des événements provenant de cet équipement. Ce standard est aujourd'hui adopté par la majorité des constructeurs d'équipements mobiles et de cartes à puces. C'est un standard qui permet d'écrire des applications à la fois puissantes et sécurisées.

Une application "Sim Toolkit" communique en général avec une ou plusieurs applications installées sur des serveurs, via le canal des messages courts. Ce canal est indépendant de celui de la voix et est standardisé par la norme "GSM". Les applications, qu'elles soient installées sur la carte "SIM" ou sur le serveur, peuvent à la fois envoyer et recevoir des messages courts qui contiennent du texte ou des données en format binaire. (Pour plus d'information sur les messages court en mode point à point, voir la norme "GSM 03.40")

Cependant, et bien que le nombre et la nature des services "GSM" à valeur ajoutée précités s'avèrent *a priori* sans limitation, les opérateurs téléphoniques et les développeurs d'applications logicielles sont constamment freinés par la limitation des ressources disponibles sur la carte à puce.

En effet, les deux inconvénients principaux présentés par la technologie "Sim Toolkit" sont :
1) la mémoire insuffisante des cartes à puce pour héberger des applications "Sim Toolkit", car celles-ci ne comportent que quelques dizaines de kilo-octets en mémoire : malgré toutes les optimisations effectuées par des développeurs d'applications logicielles très expérimentés, les opérateurs de services de téléphonie buttent sur ce manque de mémoire pour charger et/ou exécuter des applications "Sim Toolkit" en grand nombre ; et
2) le temps de réponse très élevé des cartes à puces : en effet, c'est à la carte à puce, qui est dotée d'une puissance de calcul moindre comparée aux processeurs des équipements mobiles et surtout des serveurs, que cette technologie impose d'effectuer les calculs les plus compliqués, lors de l'exécution des applications précitées.

Or, il est clair que les besoins qui se font sentir vont dans une direction opposée. Tout d'abord, les opérateurs de téléphonie souhaitent mettre à la disposition de leurs abonnés le plus grand nombre possible de services annexes supplémentaires. En outre, les opérations effectuées par la carte à puce doivent l'être dans un temps minimum. La multiplication des applications disponibles, dans la mesure d'ailleurs où cette multiplication est possible, risque d'ailleurs de dégrader les performances en rendant le temps de traitement encore plus long, du fait de mutuelles interactions.

Malgré des progrès importants de la technologie des cartes à puce, déjà constatés dans une période récente, et prévisibles dans un avenir proche, les facteurs de limitation précités restent et resteront un frein important.

Il est connu par le document US 6 055 424, de prévoir un protocole de communication entre un terminal mobile à carte à puce et un serveur pour offrir des fonctions plus avancées. Le document WO 99/63767 divulgue une méthode d'amélioration d'une logique de service d'un terminal mobile à carte à puce, grâce à une fonction d'interprétation d'une partie du contenu de l'information reçue dans la carte à puce. Ces méthodes permettent d'utiliser des capacités d'un réseau pour accroître les fonctions accessibles à l'utilisateur d'un terminal mobile à carte à puce.

Une deuxième technologie standardisée, appelée "WAP" (pour "Wireless Application Protocol"), a été proposée récemment. Ce standard a pour but de permettre aux utilisateurs des téléphones mobiles d'accéder au réseau Internet à partir de leurs téléphones mobiles, via une liaison sans fil.

Cette technologie n'est pas sans inconvénients.

Tout d'abord, il est nécessaire d'installer un navigateur "WAP", de type spécifique, car il présente des caractéristiques différentes des navigateurs de type "WEB" classiques. Ce navigateur est installé sur l'équipement mobile qui, certes possède plus de mémoire que la carte à puce, mais généralement beaucoup moins qu'un micro-ordinateur et naturellement qu'un serveur. En outre, bien que cette technologie présente l'avantage de permettre l'accès au réseau Internet, elle ne couvre pas toutes les fonctionnalités des applications "Sim Toolkit". A titre d'exemple non limitatif, une application "WAP" ne peut pas, comme dans le cas des applications "Sim Toolkit", commander les appels téléphoniques. De plus, une application "WAP" ne peut pas garantir le même degré de sécurité que celui offert par les applications "Sim Toolkit". En effet, celles-ci, utilisent des clés secrètes enregistrées dans les cartes à puce "SIM". Par exemple, une application "WAP" ne peut pas demander l'authentification d'une application sur un serveur quelconque. Ce n'est d'ailleurs pas la seule fonction de sécurité dévolue à la carte à puce "SIM". Elle assure également la sécurité et la confidentialité des informations transmises.

Pour assurer toutes ces fonctions, la carte à puce stocke un certain nombre de données dites "sensibles", des algorithmes de chiffrement et des clés associées, notamment :
- le numéro international d'abonné ou "IMSI" (pour "International Mobile Subscriber Identity") ;
- l'identité temporaire attribuée à une station mobile lors de son déplacement ou "TMSI" (pour "Temporary Mobile Subscriber Identity") ;
- une clé d'authentification individuelle, une clé de chiffrement utilisée pour chiffrer et déchiffrer des données dites de signalisations et de trafic sur la voie radio et trois algorithmes distincts de chiffrement et déchiffrement ou de génération de clés ; et
- un nombre de séquences de clés de chiffrement ou "CKSN" (pour "Ciphering Key Sequential Number"), indiquant la valeur de chiffrement ci-dessus valable pour éviter l'utilisation de clés différentes par la station mobile et le réseau.

Le fait que ces informations ou données sensibles soient stockées dans la carte à puce et que les traitements correspondants soient effectués dans celle-ci permettent d'obtenir un haut degré de sécurité et de confidentialité.

Enfin, dans l'état actuel des techniques, le coût des équipements mobiles qui supportent la technologie "WAP" reste élevé, si on le compare au coût de ceux qui supportent la technologie "Sim Toolkit".

L'invention vise à pallier les inconvénients des dispositifs et systèmes de l'art connu, et dont certains viennent d'être rappelés, tout en satisfaisant aux besoins qui se font sentir.

L'invention se fixe pour but un procédé de traitement et de transmission de données numériques sur un réseau de téléphonie mobile, notamment à la norme "GSM" permettant d'apporter aux utilisateurs des téléphones mobiles sur ce réseau, tous les services qu'on peut offrir avec les applications conforme à la technologie "Sim Toolkit", mais en s'affranchissant des limitations de mémoires et de performances rencontrées lors du développement des applications sur les cartes à puces, pour le moins en grande partie.

Pour ce faire, l'invention tire avantageusement parti du fait que les applications conformes à la technologie "Sim Toolkit" peuvent notamment envoyer des messages courts et aussi entreprendre l'exécution d'instructions, suite à la réception d'autres messages courts qui leur sont destinées.

L'architecture de réseau de téléphonie mobile selon l'invention est une architecture dans laquelle des applications "Sim Toolkit" :
1) informent des applications installées sur au moins un serveur éloigné, raccordé au dit réseau de téléphonie, de l'arrivée d'événements provenant d'un équipement mobile : ces applications seront appelées ci-après "applications Sim Toolkit rapporteuses" ; et
2) exécutent des commandes et des instructions suite à la demande d'applications implémentées sur lesdits serveurs : ces dernières applications seront appelées ci-après "applications Sim Toolkit esclaves".

De cette manière, on peut déléguer l'exécution de traitements lourds, grands consommateurs de ressources informatiques, qui s'effectuent, dans l'art connu, sur la carte à puce "SIM", à des applications implémentées sur ces serveurs.

Les serveurs précités ne présentent pas *a priori* de limitations intrinsèques, comme dans le cas des cartes à puce "SIM", ni en ce qui concerne la quantité de mémoire disponible, ni en ce qui concerne la puissance de calcul. Le nombre d'applications "Sim Toolkit" disponibles via une carte à puce "SIM" (et donc le nombre de services offerts) peut alors être fortement augmenté, tout en permettant une grande vitesse de traitement.

Par ailleurs, les fonctionnalités liées à la sécurité et la confidentialité restant confinées dans la carte à puce "SIM", comme dans l'art connu, un haut niveau de qualité de service continue d'être garanti.

L'invention a donc pour objet principal un procédé de transmission et de traitement de données numériques conforme à la revendication 1.

L'invention a encore pour objet une carte à puce conforme à la revendication 9.

L'invention va maintenant être décrite de façon plus détaillée en se référant aux dessins annexés, parmi lesquels :
- la figure 1 est un diagramme illustrant schématiquement les principales étapes de l'activation d'une application "Sim Toolkit" située sur un serveur éloigné par une application, selon un aspect de l'invention d'un premier type dit "rapporteur", située sur une carte à puce "SIM" ;
- La figure 2 est un diagramme illustrant schématiquement l'interrelation selon l'invention, entre une application située sur un serveur éloigné, d'un type dit "maître", et une application "Sim Toolkit" située sur une carte à puce "SIM", d'un deuxième type dit "esclave", selon un autre aspect de l'invention ;
- la figure 3 est un diagramme illustrant les principales étapes du procédé selon l'invention d'envoi d'une commande "pro-active" conforme à la norme "GSM 11.14" ;
- la figure 4 est un diagramme explicitant, pour un exemple particulier, les principales étapes d'échanges de données et de commandes entre une application "Sim Toolkit" située sur une carte à puce "SIM" et une application située sur un serveur éloigné, selon l'art connu ; et
- la figure 5 est un diagramme explicitant, pour cet exemple particulier, les principales étapes d'échanges de données et de commandes entre une application "Sim Toolkit" située sur une carte à puce "SIM" et une application située sur un serveur éloigné, selon le procédé de l'invention.

On va maintenant décrire de façon plus détaillée un exemple de réalisation préférée d'architecture de réseau de téléphonie mobile selon l'invention.

Comme il a été indiqué, selon l'une des caractéristiques de l'invention, on délègue l'exécution de traitements lourds, qui s'effectuent dans l'art-connu sur la carte "SIM", à des applications implémentées sur un ou plusieurs serveurs éloignés connectés au réseau.

Selon une autre caractéristique de l'invention, on prévoit deux catégories principales d'applications "Sim Toolkit" que l'on a appelé "Applications Sim Toolkit rapporteuses" et "Applications Sim Toolkit esclaves", respectivement, toutes deux implémentées sur les cartes à puce "SIM".

On va maintenant décrire de façon plus détaillée les deux types d'application.

### Application "Sim Toolkit" rapporteuse

Une application "Sim Toolkit" réagit en premier lieu aux événements provenant du téléphone mobile, ou de façon plus générale de l'équipement mobile de l'abonné. Ces événements arrivent à la carte à puce "SIM" dans une commande connue sous la dénomination anglo-saxonne "Envelope". La commande "Envelope" peut contenir, par exemple, l'événement "Menu Selection", avec comme indice de sélection celui de cette application "Sim Toolkit". Cet événement permet donc de choisir une application dans un menu qui s'affiche sur des moyens de visualisation dont est pourvu le téléphone mobile. Une description plus détaillée de cette commande peut être trouvée dans la norme "GSM 11.14".

L'équipement mobile n'a aucune connaissance des applications qui se trouvent sur les serveurs. Pour faire réagir une application sur un serveur aux événements définis dans la norme "Sim Toolkit", il est nécessaire de la coupler avec une application "Sim Toolkit" installée sur la carte "SIM", que l'on appellera ci-après "application Sim Toolkit rapporteuse". L'équipement mobile voit l'application rapporteuse comme si elle était une application "Sim Toolkit" classique. Il n'a aucune connaissance de l'application correspondante située sur un serveur. De ce point de vue, il y a transparence totale.

L'application rapporteuse s'inscrit dans la carte "SIM" pour se mettre à l'écoute des événements auxquels son application correspondante implémentée sur un serveur doit réagir. Dès que l'application rapporteuse reçoit un événement provenant de l'équipement mobile, elle prépare un message court à destination de son application correspondante. Ce message court contient toutes les données caractérisant l'événement reçu. Son envoi est réalisé de façon pratique par une commande du type "commande pro-active" précité.

L'application correspondante du serveur reçoit le message court. Ce message l'informe de l'arrivée d'un événement venant de l'équipement mobile. Elle entreprend alors le traitement relatif à la réception de cet événement. Ce traitement peut consister, par exemple, à se connecter à un site "WEB". Elle peut aussi devenir une application dite maître d'une autre application dite esclave implémentée sur la carte à puce "SIM". Elle peut par conséquent commander l'application esclave, pour qu'elle envoie des commandes "pro-actives" à l'équipement mobile et aussi pour qu'elle invoque des méthodes stockées dans bibliothèques installées sur la carte à puce "SIM".

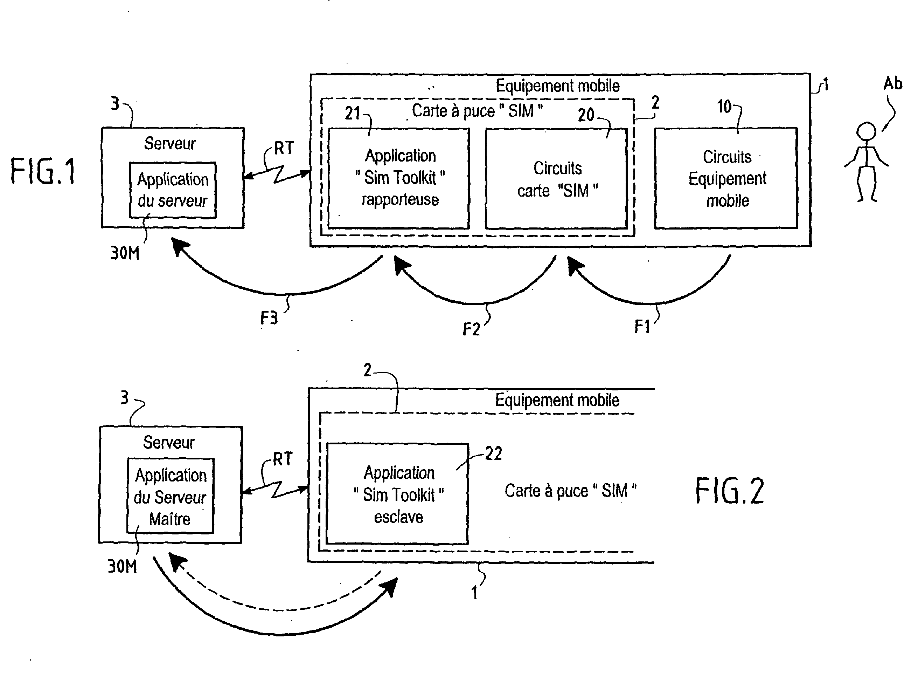

La figure 1 est un diagramme illustrant schématiquement les principales étapes de l'activation d'une application "Sim Toolkit" 30M située sur un serveur éloigné 3 par une application de type "Sim Toolkit rapporteuse" 21 située sur une carte à puce "SIM" 2 d'un équipement mobile 1. Le serveur éloigné 3 et l'équipement mobile 1 de l'abonné Ab sont tous deux connectés à un réseau de téléphonie mobile RT (non explicitement représenté). Ce réseau, bien connu de l'Homme de Métier, et classique en soi, ne nécessite aucune modification qui serait due au procédé de l'invention. Il s'ensuit que, *a priori*, tous les réseaux conformes à l'art connu conviennent, ce qui représente d'ailleurs un avantage supplémentaire de l'invention. Il n'est donc pas nécessaire de décrire plus avant un tel réseau et ses différents composants. On pourra se référer avec profit, à titre d'exemple non limitatif, à l'article de jean CELLMER, intitulé "Réseaux cellulaires, Système GSM", paru dans les "Techniques de l'Ingénieur", Volume TE 7364, novembre 1999, pages 1 à 23.

L'équipement mobile 1, par exemple un poste téléphonique portable, comprend des circuits électroniques classiques (mémoires, processeur, etc.) 10. Ces derniers peuvent être couplés à une carte à puce "SIM" 2 à l'aide d'un lecteur (non représenté). La carte à puce "SIM" 2 comprend également des circuits électroniques 20, notamment un processeur et des moyens de mémoires dans lesquels peuvent être enregistrées des applications "Sim Toolkit" que l'on appellera classiques (non représentées), car communes en soi à l'art connu, ainsi qu'une ou plusieurs applications "Sim Toolkit" rapporteuses 21 conformes à l'une des caractéristiques de l'invention. Sur la figure 1, pour illustrer le processus simplement, une seule application a été représentée, à l'extérieure des circuits 20 de la carte à puce "SIM" 2. Dans la réalité, cette application 21 est stockée, comme les applications de type classique, dans les moyens de mémoire de la carte à puce 2.

Les étapes précitées sont les suivantes (symbolisées par des flèches en trait plein sur la figure 1):
F1) les circuits 10 de l'équipement mobile 1 envoient une commande de type "Enveloppe" aux circuits 20 de la carte à puce "SIM" 2 : cette commande "Enveloppe" contient un des événements prévus par la norme GSM 11.14 précitée ;
F2) les circuits 20 de la carte "SIM" 2 envoient cet événement à une application "Sim Toolkit" rapporteuse 21 apte à y répondre ; et
F3) l'application "Sim Toolkit" rapporteuse 21 envoie ce même événement, dans un message court, à une application correspondante 30M située dans le serveur 3 qui va la traiter, via le réseau RT.

Pour des raisons qui seront explicitées ci-après, l'application 30M sera appelée "application maître".

### Application "Sim Toolkit" esclave

De façon connue en soi, une application "Sim Toolkit" de l'art connu peut notamment :
a) envoyer des commandes "pro-actives" conformes à la norme "GSM 11.14" à l'équipement mobile : elle peut, par exemple, demander à l'équipement mobile d'afficher du texte ;
b) envoyer des commandes conformes à la norme "GSM 11.11 " précitée au système d'exploitation de la carte à puce "SIM", sans passer par l'équipement mobile ; et
c) demander l'exécution de méthodes stockées dans des bibliothèques implémentées sur la carte à puce "SIM" : elle peut par exemple appeler une méthode de la carte à puce "SIM" pour demander le chiffrement d'un message à l'aide d'une clé secrète stockée sur cette carte.

Selon un aspect supplémentaire de l'invention, les applications implémentées sur les serveurs éloignés sont dotées de ces fonctionnalités. Il est ainsi possible de leur déléguer le traitement qui s'effectue, dans l'art connu, en ayant recours à une application "Sim Toolkit" classique implémentée sur la carte à puce.

Pour qu'une application implémentée sur le serveur éloigné 3 puisse effectuer ces opérations, il est nécessaire qu'elle puisse communiquer avec une application "Sim Toolkit" implémentée sur la carte à puce "SIM" 2. Elle envoie alors des commandes à cette dernière application qui les exécute. On appellera ci-après les applications implémentées sur les serveurs éloignés "Applications maîtres» et les applications "Sim Toolkit" installées sur la carte à puce "SIM" "Application Sim Toolkit esclaves".

La figure 2 est un diagramme illustrant schématiquement l'interrelation entre ces deux types d'applications.

Une application "Maître" 30M envoie une commande (trait plein sur la figure 2) à une application "Sim Toolkit esclave" 22. Cette dernière application exécute la commande, puis répond à l'application "Maître" 30M, en lui retournant le résultat de la commande (trait discontinu) après traitement.

On va maintenant décrire de façon détaillée comment une application "Maître" 30M peut envoyer des commandes des types a) à c) précités.

### Envoi d'une commande "pro-active" conforme à la norme "GSM 11.14"

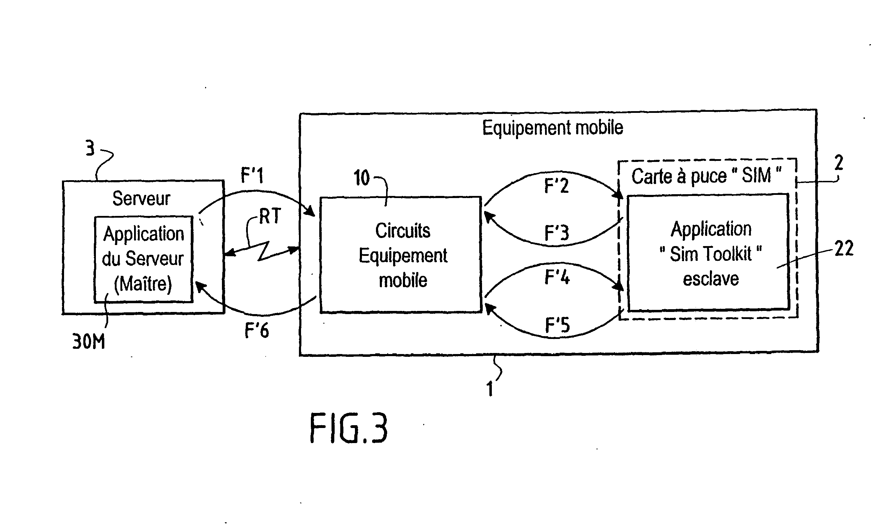

Les principales étapes du procédé selon l'invention sont explicitées ci-dessous, par référence au diagramme de la figure 3 :
a) une application maître 30M prépare une commande "pro-active" afin qu'elle soit exécutée par les circuits 10 d'un équipement mobile 1 : elle l'inclut dans des données d'un message court à destination d'une application "Sim Toolkit" esclave 22 (via les circuits 10 d'un équipement mobile 1, sur lequel la commande "pro-active" est exécutée) - flèches F'1 et F'2 sur la figure 3 - ;
b) l'application "Sim Toolkit" esclave 22 analyse les données du message court reçu : elle comprend que l'application maître 30M lui demande d'envoyer la commande "pro-active" aux circuits 10 de son équipement mobile 1, elle transfère alors cette commande à l'équipement mobile 1 et se bloque en attente d'une réponse en retour - flèche F'3- ;
c) les circuits 10 de l'équipement mobile 1 reçoivent la commande "pro-active" : ils l'exécutent et envoient une réponse à la carte "SIM" 2, sous forme d'une commande communément appelée "Terminal Response" - flèche F'4-, cette commande contenant le résultat de l'exécution de la commande "pro-active" par les circuits 10- de l'équipement mobile 1 (par exemple, si la commande "pro-active" consiste à demander de mettre sous-tension une carte à puce auxiliaire, non représentée, sur l'équipement mobile 1, le résultat envoyé dans la commande "Terminal Response" contient une suite d'octets qui est la réponse d'une mise à zéro de la carte auxiliaire) ;
d) l'application "Sim Toolkit" esclave 22 qui est restée bloquée après l'envoie de la commande "pro-active", se débloque suite à la réception de la commande "Terminal Response" précitée ;
e) l'application "Sim Toolkit" esclave 22 prépare un message court contenant le résultat de la commande "pro-active" qu'elle trouve dans la commande "Terminal Response" provenant des circuits 10 de l'équipement mobile 1;
f) l'application "Sim Toolkit" esclave 22 envoie ce message court, dans une commande "pro-active", à destination de l'application maître 30M, via les circuits 10 de l'équipement mobile 1 - flèche F'5 - ;
g) les circuits 10 de l'équipement mobile 1, transfèrent le message court vers l'application maître 30M - flèche F'6 ; et
h) l'application maître 30M le reçoit et traite la réponse de la commande "pro-active" qu'elle a précédemment envoyée.

### Envoi d'une commande non "pro-active", c'est-à-dire conforme à la norme "GSM 11.11"

L'application maître 30M (figure 3) peut envoyer des commandes "GSM 11.11" à la carte à puce "SIM" 2 suivant deux méthodes différentes, ces deux méthodes pouvant être utilisées indifféremment.

### Méthode 1

a) une application maître 30M prépare une commande, selon la norme "GSM 11.11 ", à destination d'une application "Sim Toolkit" esclave 22 implémentée sur la carte à puce "SIM" 2 : elle l'envoie dans un message court, via les circuits 10 de l'équipement mobile 1 ;
b) l'application "Sim Toolkit" esclave 22 analyse les données du message court reçu : elle transmet la commande trouvée dans ce message au système d'exploitation 23 de la carte à puce "SIM" 2 ;
c) le système d'exploitation 23 de la carte à puce "SIM" 2 exécute la commande qui vient de l'application "Sim Toolkit" esclave 22 et retourne une réponse à cette commande à cette application 22 ;
d) l'application "Sim Toolkit" esclave 22 prépare un message court ayant comme destination une application maître correspondante 30M, implémentée sur le serveur éloigné 3 : ce message contient le résultat de la commande "GSM 11.11" et est envoyé par l'application esclave aux circuits 10 de l'équipement mobile 1, dans une commande "pro-active" ;
e) les circuits 10 de l'équipement mobile 1 transfèrent le message court à l'adresse du destinataire, indiquée dans le message lui même, c'est-à-dire l'application maître 30M ; et
f) l'application maître 30M le reçoit et traite la réponse reçue.

### Méthode 2

L'application maître 30, implémentée sur le serveur éloigné 3, envoie directement une commande "GSM 11.11" dans un message court au système d'exploitation 23 de la carte à puce "SIM", selon les normes "GSM 03.40" et "GSM 03.48".

L'avantage de cette solution est sa simplicité car elle ne nécessite pas la présence d'une application "Sim Toolkit" esclave, comme dans le cas de la méthode 1.

Par contre, l'inconvénient de la méthode 2 est que très peu de systèmes d'exploitation de cartes à puce "SIM" implémentent pleinement cette fonctionnalité. En général, une application d'un serveur peut envoyer un scénario de commandes dans un message court pour être exécuté, mais la carte à puce "SIM" ne retourne pas le résultat de la commande. Si, par exemple, l'application implémentée sur le serveur a besoin de connaître le contenu d'un fichier sur la carte à puce "SIM", elle ne le pourra pas, sur la majorité des cartes à puce "SIM".

### Appel d'une fonction d'une bibliothèque de la carte à puce "SIM"

Comme il-a été indiqué, une application "Sim-Toolkit" peut avoir besoin de demander l'exécution d'une fonction comprise dans une bibliothèque de la carte à puce "SIM" (opération c) précitée). Il existe deux catégories principales de fonctions dans une carte à puce "SIM" :
1) les fonctions qui font appel dans leurs paramètres à au moins une clé secrète stockée dans la carte à puces : ces fonctions sont utilisées pour chiffrer, déchiffrer, signer ou vérifier une signature ; et
2) les fonctions qui, au contraire, n'utilisent pas de clés secrètes.

Les fonctions de la première catégorie ne peuvent pas être déportées sur un serveur si on veut conserver un degré élevé de sécurité, comme il a été rappelé. Une application esclave 22 (figure 3) doit être capable de les appeler suite à une demande de l'application maître 30M.

Une convention doit exister entre l'application esclave 22 et l'application maître 30M pour permettre à cette dernière d'effectuer des opérations de chiffrement/déchiffrement et de signature avec des clés secrètes de la carte à puce "SIM" 2.

Par exemple, l'application maître 30M envoie un message à l'application esclave 22 dans lequel elle indique la nature de la fonction de cryptologie à effectuer (par exemple un chiffrement faisant appel à l'algorithme connu sous le sigle anglo-saxon "DES", pour "Data Encryption System"). Elle indique aussi les références de la clé à utiliser, stockée dans la carte à puce "SIM" 2 et le message à chiffrer. L'application esclave 22 appelle la fonction de chiffrement appropriée et retourne le résultat à l'application maître 30M.

Pour la deuxième catégorie de fonctions, il est possible de faire appel à la même méthode que celle utilisée pour la première catégorie, mais, conformément à une caractéristique avantageuse de l'invention, ces fonctions sont implémentées directement sur un serveur éloigné 3. L'avantage de cette solution est que le traitement se fait sans aucun besoin de connexion, sur une machine *a priori* beaucoup plus puissante que la carte à puce "SIM" 2.

Conformément à l'une des caractéristiques de l'invention, une partie des applications "Sim Toolkit" est implémentée directement sur un ou plusieurs serveurs éloignés 3. Pour assurer une migration aisée de ces applications "Sim Toolkit" à partir des cartes à puces "SIM", il est également nécessaire d'implémenter toutes les fonctions associées qui se trouvent dans des bibliothèques de la carte à puce "SIM".

Pour fixer les idées, si on considère des cartes dites "Java" (marque déposée), ces fonctions sont constituées par des "APIs Javacard", des "APIs GSM 03.19", ainsi que des "APIs" dits "propriétaires", c'est-à-dire spécifiques. "Java" est un langage de programmation orienté objet développé par la société "Sun Microsystems Inc." et les "APIs" sont des interfaces programmables avec les applications. Le langage "java" permet notamment de développer de courtes applications connues sous le sigle anglo-saxon "applet" ("appliquettes"). Les applications "Sim Toolkit" peuvent être réalisées à base "d'applets".

Par ces dispositions propres à l'invention, il est possible d'assurer qu'une application en technologie "Sim Toolkit" existante, qui s'exécute dans l'art connu sur une carte à puce "SIM", s'exécutera également sur un serveur éloigné, ce sans qu'il soit nécessaire de modifier une ligne de code, ce qui constitue un avantage supplémentaire de l'invention.

Il a été supposé jusqu'à ce point que la technologie dite des messages courts (c'est-à-dire conforme à la norme "GSM 03.40") était mise en oeuvre comme technologie de transport. Le recours à cette technologie est avantageux car:
1) elle est très répandue aujourd'hui dans les réseaux "GSM" ; et
2) elle est disponible parmi les événements et les commandes "pro-actives" de la norme "Sim Toolkit" (c'est-à-dire conforme à la norme "GSM 11.14").

Cependant, il doit être clair qu'il est possible de mettre en oeuvre bien d'autres technologies de transport sur des liaisons de transmission sans fil qui existent entre une carte à puce "SIM" et un serveur éloigné, technologies actuellement disponibles ou qui le seront dans le future

Les mécanismes des applications "Sim Toolkit" esclaves et rapporteuses définis ci-dessus ne nécessiteront pas de modifications, ce qui assure une grande pérennité au procédé selon l'invention.

Dans le mécanisme des applications "Sim Toolkit" esclave et maître, l'application "Sim Toolkit" esclave a été supposée complètement esclave. Il est possible d'envisager, tout en restant dan le cadre de l'invention, des applications "Sim Toolkit" esclaves possédant aussi une certaine "intelligence". Ce type d'application, que l'on pourra appeler "hybride" est alors capable, à la fois, d'obéir à une application maître et d'effectuer des traitements locaux de façon autonome. En effet, une application "Sim Toolkit", fusse-t-elle de type esclave, continue de posséder les possibilités inhérentes aux applications "Sim Toolkit" classiques.

De même, il est possible d'adjoindre une fonctionnalité de type similaire, c'est-à-dire une certaine "intelligence", aux applications rapporteuses.

On est amené à constater que le fait de déporter des fonctionnalités applicatives d'une carte à puce "SIM" vers un serveur éloigné augmente le trafic sur le réseau et peut avoir, dans certaines conditions défavorables, des conséquences non négligeables sur les temps de réponse, car le débit du protocole des messages courts est faible.

Aussi, dans la pratique, on préfère le plus souvent des applications "Sim Toolkit" qui sont à la fois esclaves et autonomes, et/ou des applications "Sim Toolkit" qui sont à la fois rapporteuses et autonomes, ce qui permet de minimiser l'impact négatif de l'augmentation de trafic précité.

De façon pratique également, on cherche à trouver un compromis entre l'utilisation des ressources de la carte à puce "SIM" et l'envoi des messages courts qui peut s'avérer pénalisant en terme de performance.

On doit également noter que des authentifications entre les applications "Sim Toolkit" implémentées sur la carte à puce "SIM", qu'elles soient esclaves ou rapporteuses, et des applications implémentées directement sur un serveur doivent avoir lieu. Elles peuvent être réalisées en respectant la norme "GSM 03.48".

Cette norme prévoit aussi le chiffrement de certaines informations qui sont transportées lors des échanges entre une carte à puce "SIM" et un serveur éloigné.

En général, une application maître doit communiquer avec plusieurs applications esclaves. Pour ce faire, il est avantageux d'avoir recours à la technique dite de «Threads» lors de l'implémentation des "APIs" sur les serveurs.

Dans l'état actuel des techniques, les cartes à puce "SIM", de type "Java" précité, qui implémentent la norme "GSM 03.19", ne savent pas envoyer une commande aux équipements mobiles sans passer par une classe d'objet connue sous la dénomination "sim.toolkit.ProactiveHandler".

Lorsqu'une application "Sim Toolkit" esclave reçoit une commande "pro-active" envoyée par une application maître, elle doit la reconstruire en utilisant des méthodes d'une classe objet connue sous la dénomination "ProactiveHandler". On constate qu'il est donc nécessaire de ré-effectuer tout le travail préparé par le serveur qui a envoyé la commande, ce avant d'envoyer une commande "pro-active" à l'équipement mobile.

Pour que le mécanisme des applications esclaves et maîtres, selon une des caractéristiques de l'invention, conserve tous ses avantages, on implémente avantageusement sur la carte à puce "SIM", une fonction qui ne fait qu'envoyer à l'équipement mobile une commande "pro-active" à partir d'un tableau d'octets quelconque. L'application "Sim Toolkit" esclave peut alors accepter la commande "pro-active" reçue, commande qui était préparée et envoyée par l'application maître. Elle l'envoie ensuite à l'équipement mobile sans devoir effectuer aucun traitement supplémentaire.

### Exemple de réalisation pratique

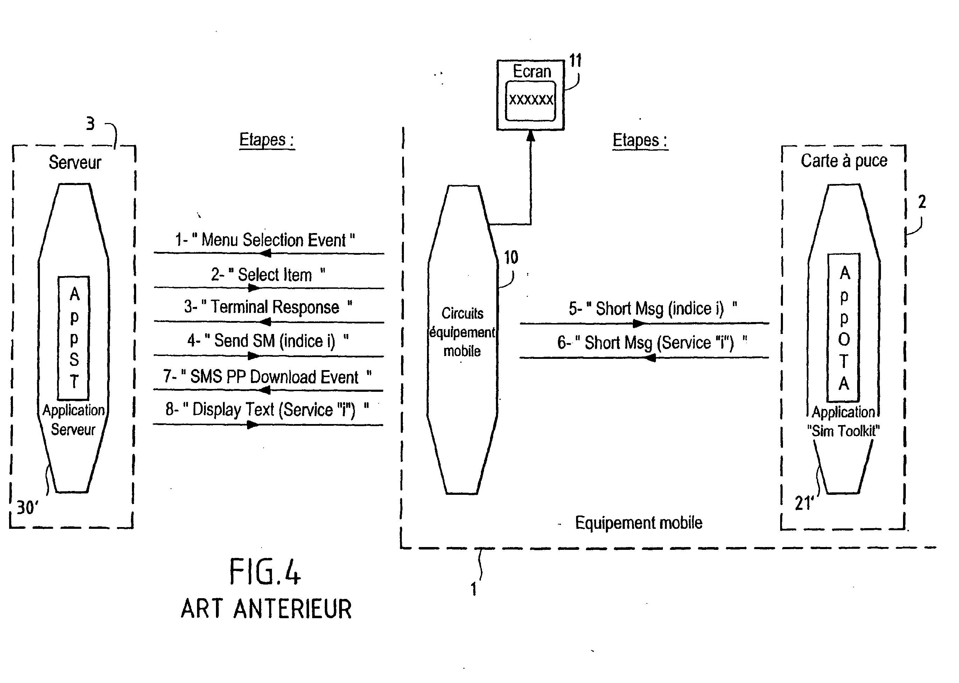

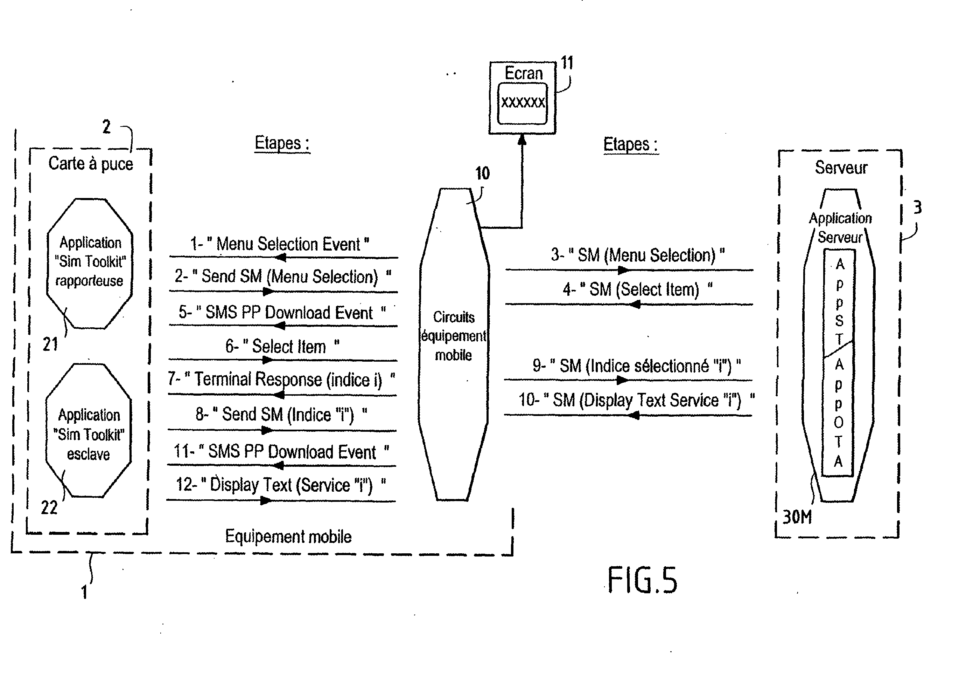

On va maintenant décrire de façon plus détaillée un exemple de réalisation pratique par référence aux figures 4 et 5.

On suppose que l'on désire accéder à *n* services implémentés sur un serveur de messages courts. Ces services seront appelés ci-après, de façon arbitraire, *Service* 1, *Service* 2, ..., *Service n*. On suppose que les applications "Sim Toolkit" sont réalisées à base d'applets "Java".

Le développement d'une telle application avec la technologie "Sim Toolkit" classique, c'est-à-dire conforme à l'art connu, nécessite le développement :
1) d'une application "Sim Toolkit", que l'on peut appeler "*AppST"*, implémentée sur une carte à puce "SIM" ; et
2) d'une autre application, que l'on peut appeler *"AppOTA",* implémentée sur un serveur éloigné, que l'on appellera "*OTA*" (pour "*Over The Air*").

L'application "*AppST*" répond à deux événements qui sont : "*Menu Selection*" (sélection de menu) et "*SMS PP Download*" (téléchargement de messages courts).

Quand l'application "*AppST*", reçoit l'événement "*Menu Selection*", elle envoie à l'équipement mobile une commander "pro-active" dénommée "*Select Item*", c'est-à-dire la sélection d'un item du menu (un service) parmi les n services proposés.

L'utilisateur choisit par exemple le service de rang ou indice arbitraire *i*, ou *Service i*. Une applet de l'application "*AppST*" envoie, dans une commande "pro-active", un message court à l'application "*AppOTA*" lui indiquant que l'utilisateur demande le service *Service i*.

L'application *"AppOTA"* reçoit le message court venant de l'application "*AppST*" et lui répond en lui retournant le contenu de *Service i* dans un autre message court.

Quand l'application "*AppST*" reçoit le message court venant de l'application *"AppOTA",* elle envoie une commande "pro-active" de type dit "*Display Text*" (affichage de texte) pour afficher son contenu sur l'écran du mobile.

La figure 4 est un diagramme illustrant schématiquement les huit étapes précédentes, conformes à l'art connu :
- Etape 1 :: envoi par les circuits 10 de l'équipement mobile 1 de "*Menu Selection Event*" à l'application "*AppST*" 30' ;
- Etape 2 :: envoi par l'application "*AppST*" 30' de "*Select Item*" aux circuits 10 de l'équipement mobile 1 ;

- Etape 4 :: Etape 3: réponse de ces circuits par l'envoi de "*Terminal-response*" à l'application "*AppST*" 30' ; envoi par celle-ci de "*Send SM (indice i)*" (envoyer message court d'indice *i*) à l'application "*AppST*" 30' ;
- Etape 5 :: envoi par ces derniers de "*Short Msg (indice i)*" (envoi du message court d'indice *i*) à l'application "*AppOTA*" 21' ;
- Etape 6:: réponse de celle-ci et envoi de "*Short Msg (Service "i"*)" (message court pour le service d'indice "*i*") ;
- Etape 7 :: envoi par les circuits 10 de l'équipement mobile 1 de "*SMS PP Down*/*oad Event*" à l'application "*AppST*" 30' ; et
- Etape 8 :: envoi par l'application de "*AppST*" 30' de "*Display Text* (*Service "i"*)" aux circuits 10 de l'équipement mobile 1 pour affichage du contenu du message court associé au service d'indice "*i*" pour l'affichage du contenu sur un écran 11 de l'équipement mobile 1.

Le développement de cette même application, selon le procédé de l'invention, s'effectue de la façon décrite ci-dessous, en regard de la figure 5.

On installe sur la carte à puce 2 deux applications "Sim Toolkit" constituées par des applets "Java" : la première est l'application rapporteuse 21 qui transmet les événements reçus dans des messages courts à une application correspondante, ou application maître 30*M* du serveur 3.

La deuxième est l'application esclave 22 qui exécute les ordres de l'application maître 30*M* du serveur 3.

Il est à remarquer que l'application maître 30M du serveur 3 joue le rôle des deux applications "*AppST*" et "*AppOTA*" de l'art connu décrit en regard de la figure 4.

Une fois que cette application 30*M* reçoit l'événement "*Menu Selection*", elle devient le maître de l'application "Sim Toolkit" esclave 22.

Elle lui demande d'abord de transmettre aux circuits 10 de l'équipement mobile 1 la commande "pro-active" "*Select Item*" précitée. Quand elle reçoit la réponse de cette commande, elle lui demande de nouveau d'exécuter la commande "pro-active" "*Display Text*" pour afficher le service sélectionné.

Le procédé selon l'invention, pour l'application décrite, comprend désormais douze étapes détaillées ci-après :
- Etape 1 :: envoi par les circuits 10 du mobile 1 de "Menu Selection Event" à l'application rapporteuse (cette étape est initiée par l'usager de l'équipement mobile 1);
- Etape 2 :: réponse et envoi par l'application rapporteuse 21 de "*Send SM (Menu Selection)*" (envoyer un message court de sélection de menu) aux circuits 10 du mobile 1;
- Etape 3 :: envoi par les circuits 10 du mobile 1 de "*SM (Menu Selection)*" à l'application 30M (partie "*AppST*" de cette application) ;
- Etape-4 :: traitement et envoi par l'application 30M de "*SM(Select Item)*" aux circuits 10 du mobile 1 ;
- Etape 5 :: envoi par ces derniers de "*SMS PP Download Event*" à l'application esclave 22 ;
- Etape 6 :: traitement par l'application esclave 22 et envoi de "*Select Item*" aux circuits 10 du mobile 1 ;
- Etape 7 :: envoi par les circuits 10 du mobile 1 de "*Terminal Response (indice i)*" à l'application esclave 22 ;
- Etape 8 :: envoi par cette dernière de "*Send SM (Indice "i")*" aux circuits 10 du mobile 1 ;
- Etape 9 :: envoi par les circuits 10 du mobile 1 de "*SM (selected indice "i")*" (message court pour traitement à l'indice sélectionné "*i*") à l'application 30M (partie "*AppOTA*") ;
- Etape: 10 : traitement et envoi par l'application 30M de "*SM(Display Text Service "i")*" aux circuits 10 du mobile 1 ;
- Etape 11 :: envoi par ces derniers de "*SMS PP Download Event*" à l'application esclave 22 ; et
- Etape 12 :: traitement et envoi de "*Display text (Service "i")*" aux circuits 10 du mobile 1, pour affichage du contenu du message court.

La mise en oeuvre du procédé selon l'invention induit une légère augmentation du trafic sur le réseau, puisque le nombre d'étapes est supérieur pour une même application. Cependant, l'application principale associée à un service déterminé à été déportée de la carte à puce "SIM" 2 vers le serveur 3. Il s'ensuit que le nombre de services n'est potentiellement plus limité, puisqu'il n'est plus nécessaire de charger autant d'applets sur la carte à puce "SIM" 2. Les ressources en mémoire du serveur 3 sont en effet incomparablement supérieures à celles présentes dans la carte à puce "SIM" 2. De même la vitesse de traitement est très grande, car le ou les processeurs présents sur le serveur 3 sont également beaucoup plus puissant que ceux que l'on peut implanter dans la carte à puce "SIM" 2.

En outre, suivant le contexte précis dans lequel il se trouve, un développeur d'applications logicielles conserve la possibilité de répartir de façon optimisée les traitements à réaliser entre la carte à puce "SIM" 2 et le serveur 3, selon un aspect supplémentaire avantageux de l'invention qui a été explicité.

Pour ce faire, certaines applications "Sim Toolkit" peuvent être laissées sur la carte à puce "SIM" 2. Ces d'applications fonctionnent de façon identique, ou pour le moins très similaire, aux applications de l'art connu.

Selon une autre variante de réalisation, permise par le procédé de l'invention, tout ou partie des applications esclaves 22 et/ou rapporteuses 21 peuvent être du type hybride précité, c'est-à-dire conserver une certaine autonomie. Il s'ensuit que, dans ce cas, une partie des traitements continue d'être réalisée en local, ce qui diminue en proportion le trafic entre la carte à puce "SIM" 2 et le ou les serveur(s) éloigné(s) 3.

A la lecture de ce qui précède, on constate aisément que l'invention atteint bien les buts qu'elle s'est fixés.

Elle permet notamment de déporter les traitements "lourds", grands consommateurs de ressources informatiques, sur des systèmes de traitements de données (serveurs éloignés) ne présentant pas de limitations, du moins de limitations importantes, notamment en moyens de stockage de données. En outre les traitements peuvent être effectués à grande vitesse, car les moyens de calculs présents sur ces systèmes sont également très rapides et puissants.

Selon un autre aspect de l'invention, bien que le procédé selon l'invention puisse impliquer un surplus de trafic, dans certaines conditions, cet inconvénient peut toutefois être fortement minimisé en optimisant la part des traitements déportés et la part des traitements restant effectués en local, c'est-à-dire sur la carte à puce "SIM" ou tout module en faisant fonction.

De ce fait, l'invention permet d'offrir un nombre virtuellement illimité de services sans devoir augmenter pour autant la quantité de données à stocker sur la carte à puce "SIM", ou pour le moins de façon marginale.

On doit aussi bien comprendre que les applications déportées précitées englobent des applications "Sim Toolkit" proprement dites, mais aussi des fichiers de données associés. A titre d'exemple, il peut être avantageux de déporter les données personnelles d'un utilisateur, ce que l'on nomme habituellement son "environnement", sur un serveur éloigné : carnet d'adresses, liste de numéros de téléphone, etc. Là encore, la taille de ces fichiers devient virtuellement illimitée.

On peut enfin remarquer, que l'invention présente l'avantage, lorsqu'une mise à jour d'une ou plusieurs application(s) doi(ven)t être effectuée(s), si celle(s)-ci est(sont) implantée(s) sur un serveur éloigné, cette mise à jour peut être réalisée par l'opérateur de façon très simple et rapide, car centralisée. Dans le cas d'applications "Sim Toolkit" standards, c'est-à-dire conformes à l'art connu, implantées sur les cartes à puce, la même opération nécessiteraient la modification de toutes les cartes à puce stockant les applications à mettre à jour, c'est-à-dire le plus souvent leur remplacement.

Il doit être clair cependant que l'invention n'est pas limitée aux seuls exemples de réalisations explicitement décrits, notamment en relation avec les figures 1 à 3 et 5.

Elle n'est pas non plus limitée, comme il a été indiqué, seulement à des protocoles de transmission utilisant des messages courts.

Enfin, si elle s'applique avantageusement à des réseaux de téléphonie au standard "GSM", d'autres standards peuvent convenir, et notamment les standards en cours d'élaboration : "GPRS", "UTMS", etc. De façon générale, l'invention trouve application à chaque fois que l'on utilise un équipement mobile coopérant avec une carte à puce ou tout système embarqué similaire, et qu'il existe une séparation entre des fonctions directement implantées dans ce système embarqué et des fonctions présentes dans l'équipement mobile.

Elle permet aussi un interfaçage avec des applications de type "WAP" ou de réaliser des fonctions de ce type. Par exemple, une application maître, présente sur un serveur éloigné, peut directement accéder au réseau Internet, à la demande de l'équipement mobile, sans repasser au préalable par l'équipement mobile. Le résultat des requêtes posées est ensuite renvoyé à l'application esclave, selon le processus propre à l'invention.

## Revendications

1. Procédé de transmission et de traitement de données numériques sur un réseau de téléphonie mobile (RT) comprenant un équipement mobile (1 - 10) coopérant avec un système embarqué à puce électronique (2 - 20), la puce étant munie de moyens de traitement d'information et de moyens de stockage de données, une première pièce de logiciel particulière (21), d'un type dit rapporteur, étant prévue dans les moyens de stockage de données, **caractérisé en ce que** le procédé comprend :
- une étape de réception dans la puce (2 20), par la pièce de logiciel particulière (21) de type rapporteur, d'un événement transmis par l'équipement mobile (1) ; et
- en réponse à la réception dudit événement, une étape de délégation, dans laquelle une exécution d'instructions associées à cet événement, en vue de réaliser des fonctionnalités associées à une application prédéterminée, s'effectuant dans la puce (2 -20) est déléguée par la première pièce de logiciel particulière (21) de type rapporteur à une pièce de logiciel associée (30M) implémentée dans un serveur éloigné (3), cette pièce de logiciel associée (30M) étant d'un type dit maître,
- une étape de réception, par une deuxième pièce de logiciel particulière (22) de type esclave, stockée dans les moyens de stockage de données de la puce, de commandes de la pièce logiciel (30M) de type maître qui lui est associée,
- l'exécution, par ladite deuxième pièce de logiciel particulière (22), desdites commandes par l'intermédiaire desdits moyens de traitement d'information de la puce, et
- la retransmission, par ladite deuxième pièce de logiciel particulière (22), des résultats de ladite exécution de commande à ladite pièce de logiciel de type maître associée (30M).

2. Procédé selon la revendication 1, **caractérisée en ce que** les moyens de traitement d'information et de stockage de données de la puce (2 -20) sont destinés à mémoriser au moins des pièces de logiciel d'un type capable, tout à la fois, de commander ledit équipement mobile (1 - 10) par l'émission de commandes déterminées et de réagir à des événements provenant de cet équipement par exécution d'instructions associées à ces dits événements, en vue de réaliser des fonctionnalités associées à au moins une application prédéterminée.

3. Procédé selon la revendication 1 ou 2, **caractérisé en ce** ladite (ou lesdites) pièce de logiciel de type rapporteur (21) retransmet à ladite (ou lesdites) pièce de logiciel associée (30M) des données caractéristiques desdits événements reçus dudit équipement mobile (1 - 10) et en ce que cette pièce de logiciel associée (30M) exécute, par l'intermédiaire de moyens de traitement d'information dudit serveur éloigné (3), sur réception desdites données caractéristiques, tout ou partie desdites instructions associées à l'une desdites applications prédéterminées et retransmet des résultats de ladite exécution au dit équipement mobile (1 - 10) et/ou au dit système embarqué à puce électronique (2 - 20).

4. Procédé selon l'une des revendications 1 à 3, **caractérisé en ce que** ladite puce (2 - 20) étant sous la commande d'un système d'exploitation déterminé, ladite (ou lesdites) pièce de logiciel associée (30M) implémentée sur un desdits serveurs éloignés (3) transmet lesdits résultats d'exécution sous forme de commandes envoyées directement au dit système d'exploitation pour réaliser une opération déterminée et **en ce que** des résultats de cette opération sont retransmis à ladite pièce de logiciel associée *(30M)*.

5. Procédé selon l'une des revendications 1 à 4, **caractérisé en ce que**, les communications entre la pièce de logiciel associée (30M) de type maître et les première et deuxième pièces de logiciel particulières (21, 22) se font par l'intermédiaire d'un réseau de téléphonie mobile.

6. Procédé selon l'une quelconque des revendications précédentes, **caractérisé en ce que** lesdites pièces de logiciel de types rapporteur (21) et/ou esclave (22) sont associées à une fonctionnalité supplémentaire, d'un type dit autonome, de manière à ce que ces pièces de logiciel (21, 22) puissent exécuter directement sur ladite puce électronique (2 - 20) une partie préétablie desdites applications prédéterminées.

7. Procédé selon l'une des revendications 1 à 6, **caractérisé en ce que** ledit réseau de téléphonie mobile (RT) obéit à la norme dite "GSM" et lesdites pièces de logiciel obéissent à la norme "GSM 11.14".

8. Procédé selon l'une des revendications 1 à 7, **caractérisé en ce que**, ledit réseau de téléphonie (RT) comprenant au moins deux canaux de transmission distincts, un canal dit de données de voix et un canal dit de messages, lesdites données numériques transmises sont constituées de messages d'un type dit court comprenant 140 octets ou 160 septets transmis par ledit canal de messages.

9. Carte à puce destinée à coopérer avec un équipement mobile (1 - 10), **caractérisée en ce qu'**elle comprend une puce incluant ;
- des moyens de traitement d'information ; et
- des moyens de stockage de données comportant :
o au moins une première pièce de logiciel particulière (21), d'un type dit rapporteur, agencée pour :
■ recevoir dans la puce un événement transmis par l'équipement mobile, et
■ en réponse à la réception dudit événement, déléguer, l'exécution d'instructions associées à cet événement, en vue de réaliser des fonctionnalités associées à une application prédéterminée, s'effectuant dans la puce (2 -20) à une pièce de logiciel associée (30M) implémentées dans un serveur éloigné (3), cette pièce de logiciel associée (30M) étant d'un type dit maître,
o une deuxième pièce de logiciel particulière (22) de type esclave agencée pour :
■ recevoir des commandes de la pièce logiciel (30M) de type maître qui lui est associée,
■ exécuter lesdites commandes par l'intermédiaire desdits moyens de traitement d'information de la puce, et
■ retransmettre des résultats de ladite exécution de commande à ladite pièce de logiciel de type maître associée (30M).

10. Carte à puce selon la revendication 9, **caractérisée en ce que** les première et deuxième pièces (21, 22) de logiciel particulières sont aptes à communiquer avec la pièce de logiciel associée (30M) de type maître par l'intermédiaire d'un réseau de téléphonie mobile.

11. Carte à puce selon la revendication 9 ou 10, **caractérisée en ce que** lesdites pièces de logiciel de types rapporteur (21) et/ou esclave (22) sont associées à une fonctionnalité supplémentaire, dite autonome, de manière à ce que ces pièces de logiciel puissent exécuter directement sur ladite carte à puce (2 - 20) une partie préétablie desdites applications prédéterminées.

12. Carte à puce selon l'une des revendications 9 à 11, **caractérisée en ce qu'**elle est constituée par une carte à puce du type dit "SIM" (2).

## Claims

1. A method for transmitting and processing digital data on a mobile telephony network (RT) comprising a piece of mobile equipment (1 - 10) that cooperates with an embedded system including an electronic chip (2 - 20), where the said chip has data processing means and data storage means, and where a first specific piece of software (21) of the so-called reporter type, is provided in the data storage means, **characterised in that** the method includes:
- a step of reception in the chip (2 - 20) by the specific piece of software (21) of the reporter type, of an event transmitted by the piece of mobile equipment (1); and
- in response to the reception of the said event, a delegation step, during which the execution of instructions associated with that event in order to carry out the functions associated with a predetermined application carried out in the chip (2 - 20) is delegated by the first specific piece of software (21) of the reporter type to an associated piece of software (30M) implemented in a remote server (3), where that associated piece of software (30M) is of the so-called master type,
- a reception step by a second specific piece of software (22) of the slave type, stored in the data storage means of the chip, of commands from the piece of software (30M) of the master type associated with it,
- the execution, by the second specific piece of software (22), of the said commands through the said data processing means of the chip, and
- the retransmission, by the said second specific piece of software (22), of the results of the said execution of commands to the said associated piece of software of the master type (30M).

2. A method according to claim 1, **characterised in that** the data processing and storage means of the chip (2 - 20) are designed to store at least pieces of software of a type that is capable, at the same time, of commanding the said mobile piece of equipment (1 -10) by emitting determined commands and reacting to events from the equipment by executing instructions associated with these said events, in order to carry out functions associated with at least one predetermined application.

3. A method according to claim 1 or 2, **characterised in that** the said piece or pieces of software of the reporter type (21) retransmit to the said associated piece or pieces of software (30M) characteristic data of the said events received from the said mobile piece of equipment (1 - 10) and **in that** that associated piece of software (30M) executes, through data processing means of the said remote server (3) upon the receipt of the said characteristics data, all or part of the said instructions associated with one of the said predetermined applications and retransmits the results of the said execution to the said mobile equipment (1 -10) and/or to the said embedded system with an electronic chip (2 -20).

4. A method according to any of claims 1 to 3, **characterised in that** the said chip (2 - 20) is under the command of a determined operating system, the said associated piece or pieces of software (30M) implemented on one of the said remote servers (3) transmits the said results of execution in the form of commands sent directly to the said operating system to carry out a determined operation and **in that** the results of that operation are retransmitted to the said associated piece of software (30M).

5. A method according to any of claims 1 to 4, **characterised in that** the communications between the associated piece of software (30M) of the master type and the first and second specific pieces of software (21, 22) take place through a mobile telephony network.

6. A method according to any of the previous claims, **characterised in that** the said pieces of software of the reporter type (21) and/or slave type (22) are associated with an additional function, of a so-called independent type, so that the pieces of software (21, 22) can directly execute on the said electronic chip (2 - 20) a pre-established part of the said predetermined applications.

7. A method according to any of claims 1 to 6, **characterised in that** the said mobile telephony network (RT) complies with the so-called "GSM" standard and the said pieces of software comply with the standard "GSM 11.14"

8. A method according to any of claims 1 to 7, **characterised in that** the said telephony network (RT) including at least two distinct transmission channels, one so-called voice data channel and one so-called message channel, the said digital data transmitted are made up of messages a so-called short type including 140 eight-bit bytes or 160 seven-bit bytes sent by the said message channel.

9. A smart card designed to cooperate with a mobile piece of equipment (1 - 10) **characterised in that** it comprises a chip including:
- data processing resources; and
- data storage resources comprising:
o at least one specific piece of software (21) of the so-called reporter type, developed to:
■ receive in the chip an event transmitted by the mobile piece of equipment, and
■ in response to the reception of the said event, delegate the execution of instructions associated with the event, in order to carry out functions associated with a predetermined application, that are carried out in the chip (2 - 20) to an associated piece of software (30M) implemented in a remote server (3), where this associated piece of software (30M) is of the so-called master type,
o a second specific piece of software (22) of the slave type designed to:
■ receive commands from the master type piece of software (30M) which is associated with it,
■ execute the said commands through the said data processing resources of the chip, and
■ retransmit the results of the said execution of commands to the said associated master type piece of software (30M).

10. A chip card according to claim 9, **characterised in that** the first and second specific pieces of software (21, 22) are capable of communicating with the associated piece of software (30M) of the master type through a mobile telephony network.

11. A chip card according to claim 9 or 10, **characterised in that** the said pieces of reporter type (21) and/or slave type (22) software are associated with an additional function, called independent function, so that those pieces of software can directly execute on the chip card (2 - 20) a pre-established part of the said predetermined applications.

12. A chip card according to any of claims 9 to 11, **characterised in that** it is made up of a chip card of the so-called SIM type (2).

## Patentansprüche

1. Verfahren zur Übertragung und Verarbeitung von digitalen Daten in einem Mobilfunknetz (RT), das aus einem mobilen Endgerät (1-10) besteht, welches mit einem eingebetteten System mit Mikrochip (2-20) zusammenarbeitet, wobei der Mikrochip mit Datenverarbeitungs- und Datenspeicherungsmitteln ausgestattet ist und ein erster separater Software-Baustein (21), der sogenannte Subcarrier, in den Datenspeicherungsmitteln vorgesehen ist, **dadurch gekennzeichnet, dass** das Verfahren Folgendes umfasst:
- eine Phase des Empfangs eines durch das mobile Endgerät (1) übertragenen Ereignisses im Mikrochip (2-20) über den separaten Software-Baustein (21) des Typs Subcarrier; und
- als Reaktion auf den Empfang des genannten Ereignisses eine Phase der Übertragung, bei der eine Ausführung der mit diesem Ereignis verbundenen Anweisungen zur Ausführung der mit einer vorherbestimmten Anwendung verbundenen Funktionen im Mikrochip (2-20) vom ersten separaten Software-Baustein (21) des Typs Subcarrier auf einen assoziierten Software-Baustein (30M) übertragen wird, der in einem entfernten Server (3) implementiert wird, wobei dieser assoziierte Software-Baustein (30M) ein sogenannter Master ist,
- eine Phase des Empfangs von Befehlen, die von dem mit einem zweiten separaten Software-Baustein verbundenen Software-Baustein (30M) des Typs Master ausgehen, in einem zweiten separaten Software-Baustein (22) des Typs Slave, der in den Datenspeicherungsmitteln des Mikrochips gespeichert ist,
- die Ausführung der genannten Befehle durch den genannten zweiten separaten Software-Baustein (22) über die genannten Datenverarbeitungsmittel des Mikrochips, und
- die Übertragung der Ergebnisse der genannten Ausführung des Befehls an den genannten assoziierten Software-Baustein des Typs Master (30M) durch den genannten zweiten separaten Software-Baustein (22).

2. Verfahren nach Anspruch 1, **dadurch gekennzeichnet, dass** die Datenverarbeitungs- und Datenspeicherungsmittel des Mikrochips (2-20) dazu gedacht sind, mindestens Software-Bausteine eines Typs zu speichern, der gleichzeitig das genannte mobile Endgerät (1-10) über die Ausgabe von bestimmten Befehlen steuert und durch die Ausgabe von Anweisungen in Verbindung mit den Ereignissen auf Ereignisse dieses Geräts reagieren kann, um mit mindestens einer vorherbestimmten Anwendung verbundene Funktionen auszuführen.

3. Verfahren nach Anspruch 1 oder 2, **dadurch gekennzeichnet, dass** dieser (oder diese) genannte(n) Software-Baustein(e) des Typs Subcarrier (21) Daten an den (oder die) genannten assoziierten Software-Baustein(e) (30M) überträgt/übertragen, die für die genannten, vom genannten mobilen Endgerät (1-10) empfangenen Ereignissen kennzeichnend sind, und **dadurch**, dass dieser assoziierte Software-Baustein (30M) durch Datenverarbeitungsmittel des genannten entfernten Servers (3) nach Empfang der genannten kennzeichnenden Daten alle oder einen Teil der genannten Anweisungen in Verbindung mit einer der genannten vorherbestimmten Anwendungen ausführt und die Ergebnisse der genannten Ausführung wieder an das genannte mobile Endgerät (1-10) bzw. an das genannte eingebettete System mit Mikrochip (2-20) übermittelt.

4. Verfahren nach einem der Ansprüche 1 bis 3, **dadurch gekennzeichnet, dass** der genannte Mikrochip (2-20) von einem bestimmten Betriebssystem gesteuert wird und der (oder die) genannte(n), auf einem der genannten entfernten Server (3) implementierte(n) assozüerte(n) Software-Baustein(e) (30M) die genannten Ausführungsergebnisse in Form von Befehlen daher direkt an das genannte Betriebssystem übermittelt, um eine bestimmte Aktion auszuführen, und **dadurch**, dass die Ergebnisse dieser Aktion wieder an den genannten Software-Baustein (30M) übermittelt werden.

5. Verfahren nach einem der Ansprüche 1 bis 4, **dadurch gekennzeichnet, dass** die Kommunikation zwischen dem assoziierten Software-Baustein (30M) des Typs Master und dem ersten und zweiten separaten Softwarte-Baustein (21, 22) über ein Mobilfunknetz erfolgt.

6. Verfahren nach einem der vorstehenden Ansprüche, **dadurch gekennzeichnet, dass** die genannten Software-Bausteine des Typs Subcarrier (21) bzw. Slave (22) mit einer zusätzlichen, sogenannten autonomen Funktion verbunden sind, so dass diese Software-Bausteine (21, 22) direkt auf dem genannten Mikrochip (2-20) einen vorher festgelegten Teil der genannten vorherbestimmten Anwendungen ausführen können.

7. Verfahren nach einem der Ansprüche 1 bis 6, **dadurch gekennzeichnet, dass** das genannte Mobilfunknetz (RT) dem sogenannten "GSM"-Standard entspricht und die genannten Software-Bausteine dem Standard "GSM 11.14" entsprechen.

8. Verfahren nach einem der Ansprüche 1 bis 7, **dadurch gekennzeichnet, dass** das genannte Mobilfunknetz (RT) aus mindestens zwei verschiedenen Übertragungskanälen besteht, einem Kanal für Sprachdaten und einem Kanal für Nachrichten, wobei die genannten übertragenen digitalen Daten aus sogenannten Kurznachrichten bestehen und 140 Oktetts oder 160 Septetts umfassen, die über den genannten Kanal für Nachrichten übertragen werden.

9. Mikrochipkarte zur Zusammenarbeit mit einem mobilen Endgerät (1-10), **dadurch gekennzeichnet, dass** sie einen Mikrochip mit Folgendem enthält:
- Datenverarbeitungsmittel; und
- Datenspeicherungsmittel mit:
o mindestens einem ersten separaten Software-Baustein (21) des Typs Subcarrier, der ausgelegt ist, um:
■ im Mikrochip ein durch das mobile Endgerät übertragenes Ereignis zu empfangen, und
■ als Reaktion auf den Empfang des genannten Ereignisses die Ausführung von mit diesem Ereignis verbundenen Anweisungen an einen assoziierten, in einem entfernten Server (3) implementierten Software-Baustein (30M) des Typs Master zu übertragen, um im Mikrochip (2-20) mit einer vorherbestimmten Anwendung verbundene Funktionen auszuführen,
o einem zweiten separaten Software-Baustein (22) des Typs Slave, der ausgelegt ist, um:
■ Befehle des mit ihm verbundenen Software-Bausteins (30M) des Typs Master zu erhalten,
■ die genannten Befehle über die genannten Datenverarbeitungsmittel des Mikrochips auszuführen, und
■ die Ergebnisse der genannten Ausführung des Befehls wieder an den genannten assoziierten Software-Baustein des Typs Master (30M) zu übertragen.

10. Mikrochipkarte nach Anspruch 9, **dadurch gekennzeichnet, dass** der erste und der zweite separate Software-Baustein (21, 22) mit dem assoziierten Software-Baustein (30M) des Typs Master über ein Mobilfunknetz kommunizieren können.

11. Mikrochipkarte nach Anspruch 9 oder 10, **dadurch gekennzeichnet, dass** die genannten Software-Bausteine des Typs Subcarrier (21) bzw. Slave (22) mit einer zusätzlichen, sogenannten autonomen Funktion verbunden sind, so dass die Software-Bausteine einen vorher festgelegten Teil der genannten vorherbestimmten Anwendungen direkt auf der genannten Mikrochipkarte (2-20) ausführen können.

12. Mikrochipkarte nach einem der Ansprüche 9 bis 11, **dadurch gekennzeichnet, dass** sie aus einer sogenannten "SIM"-Mikrochipkarte (2) besteht.
